**Europäisches Patentamt**

**European Patent Office**

**Office européen des brevets**

(19)

(11) Veröffentlichungsnummer : **0 153 560**
**B1**

(12) # EUROPÄISCHE PATENTSCHRIFT

(45) Veröffentlichungstag der Patentschrift :
28.06.89

(51) Int. Cl.⁴ : **B 23 B 31/20**

(21) Anmeldenummer : **85100284.0**

(22) Anmeldetag : **12.01.85**

(54) Spannvorrichtung.

(30) Priorität : **10.02.84 DE 3404677**

(43) Veröffentlichungstag der Anmeldung :
**04.09.85 Patentblatt 85/36**

(45) Bekanntmachung des Hinweises auf die Patenterteilung : **28.06.89 Patentblatt 89/26**

(84) Benannte Vertragsstaaten :
**CH DE FR GB IT LI NL**

(56) Entgegenhaltungen :
**EP–A– 0 006 806**
**DE–C– 470 659**
**US–A– 2 471 921**
**US–A– 3 246 903**

(73) Patentinhaber : **Rheinmetall GmbH**
**Ulmenstrasse 125 Postfach 6609**
**D-4000 Düsseldorf (DE)**

(72) Erfinder : **Bischopink, Klaus**
**Derfflinger Strasse 20**
**D-4000 Düsseldorf 30 (DE)**

(74) Vertreter : **Podszus, Burghart, Dipl.-Phys.**
**Rheinmetall GmbH Ulmenstrasse 125 Postfach 6609**
**D-4000 Düsseldorf (DE)**

## Beschreibung

Die Erfindung betrifft eine Spannvorrichtung nach dem Oberbegriff des Patentanspruchs 1.

Zum Einspannen von zu bearbeitenden Werkstücken sind bereits hydraulisch arbeitende Dehnspanner bekannt, bei denen ein Teil der dünnwandigen Innenbohrung über ein hydraulisches Medium mit Spanndruck beaufschlagt wird und das Werkstück festspannt. Diese bekannten Dehnspanner, die nur eine geringe Abweichung vom Solldurchmesser des Werkstücks zulassen, arbeiten jedoch in der Praxis nur bei konstanten Umgebungsbedingungen, die unter normalen Arbeitsbedingungen nicht immer garantiert werden können, zufriedenstellend. So ist beispielsweise bei geringen Leckverlusten des Hydraulikmediums oder bei Überschreiten einer unteren und oberen Temperaturgrenze die Spannsicherheit nicht mehr gewährleistet. An arbeitsfreien Tagen müssen derartige Dehnspanner zudem in temperierten Räumen aufbewahrt werden, um bei Arbeitsbeginn ihre Einsatzfähigkeit zu ermöglichen. Geringste Leckagen, die wie zuvor beschrieben, die Spannsicherheit beeinträchtigen, erfordern darüber hinaus kosten- und zeitaufwendige Reparaturen.

Aus der US-A-3,246,903 ist eine diese vorbeschriebenen Nachteile weitgehendst vermeidbare ausschließlich mit mechanischen Mitteln arbeitende Spannvorrichtung bekannt. Bei dieser Spannvorrichtung erfolgt die Spannkrafteinleitung über eine auf das Vorrichtungsgehäuse schraubbare Spannmutter im Zusammenwirken mit zwei Druckringen mit jeweils kegelförmigen Innenflächen, wobei die gewünschte Klemmwirkung auf das Werkstück mittels einer Spannhülse ausgeübt wird, deren Endteile als Spannzangen mit kegelförmigen Außenflächen ausgebildet sind, die sich in Kontakt mit den kegelförmigen Innenflächen der Druckringe befinden. Die Druckringe werden beim Spannen des Werkstücks jedoch aufeinander zu bewegt. Dazu ist es zur Erzeugung einer ausreichenden Klemmkraft notwendig, die einzige Spannmutter, beispielsweise wesentlich über den Durchmesser der Druckringe hinaus raumaufwendig zu dimensionieren.

Aus der US-A-2,471,921 ist eine mechanische Spannvorrichtung nach dem Oberbegriff des Patentanspruchs 1 bekannt. Bei dieser Spannvorrichtung werden die Druckringe beim Spannen des Werkstücks auch in Axialrichtung voneinander fortbewegt bzw. beim Lösen aufeinander zu bewegt. Zum Spannen und zum Lösen der Druckringe ist es jedoch notwendig, daß eine zwischen den Druckringen angeordnete ringförmige Schraubenfeder von einem in axialer Richtung bewegbaren Schieber gespannt und entspannt werden muß. Der Schieber wird dabei von auf beiden Gehäuseseiten angeordneten und jeweils separat betätigbaren Stiften hin- und herbewegt. Zum Lösen der Druckringe ist ein weiteres als Druckfeder ausgebildetes Federelement vorgesehen.

Diese Vorrichtung erfordert neben einem raumaufwendigen und komplizierten Aufbau eine umständliche Bedienung von zwei gegenüberliegenden Gehäuseseiten her. Des weiteren ist es in nachteiliger Weise möglich, daß die zum Schliessen notwendige ringartig ausgebildete Feder aufgrund des beim Klemmvorgang erforderlichen großen Verformungsgrades nur bedingt haltbar ist, wodurch eine störungsfreie Betriebsweise der Vorrichtung nicht garantiert werden kann.

Der Erfindung liegt die Aufgabe zugrunde, eine Spannvorrichtung anzugeben, die einfach und raumsparend aufgebaut ist sowie ein zuverlässiges Einspannen eines zu bearbeitenden Werkstückes ohne Anpassungsprobleme im Zusammenwirken mit hochleistungsfähigen Bearbeitungsmaschinen gewährleistet.

Gelöst wird diese Aufgabe durch die im Kennzeichen des Patentanspruchs 1 angegebenen Merkmale. Die Merkmale des einzigen Unteranspruchs nennen vorteilhafte Ausgestaltungen und Weiterbildungen der Erfindung.

Durch den Einsatz von Spannschrauben lassen sich die Druckringe in raumsparender und einfacher Weise unmittelbar von einer Vorrichtungsseite her und durch die Bohrungen der Druckringe hindurch mittels eines Werkzeuges definiert für die notwendige Klemmkraft vorspannen und lösen. Die Erzeugung der notwendigen klemmkraft erfolgt sicher durch störungsunanfällige Druckschrauben, wodurch besonders vorteilhaft zum Spannen größerer rotationssymmetrischer Werkstücke hohe Klemmkräfte erzeugbar sind.

Die Erfindung wird nachfolgend unter Bezug auf die Zeichnung näher erläutert. Dabei zeigt:

Fig. 1 : einen Längsschnitt durch die Spannvorrichtung ;

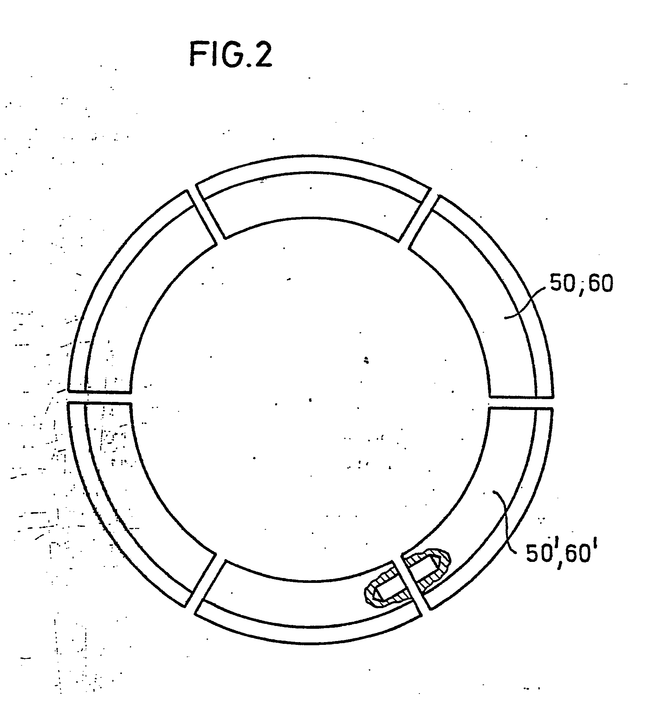

Fig. 2 : eine Vorderansicht auf eine Spannzange als Teil der Spannvorrichtung nach Fig. 1.

Die Spannvorrichtung 100 umfaßt zunächst ein im wesentlichen hohlzylinderförmiges Gehäuse 1, das das eingespannte Werkstück 101 koaxial umgibt und das vornehmlich zur Lagerung der Spannmittel dient. Als Spannmittel sind zwei, vorzugsweise jeweils aus sechs Segmenten 50, 60 bestehende Spannzangen 5, 6 vorgesehen, die mit ihren achsnahen Innenflächen auf zumindest teilweise zylindrischen Außenkonturen des zu halternden Werkstücks 101 aufliegen und bei Einwirkung eines radial nach innen gerichteten Preßdrucks dieses zwischen sich einklemmen. Dieser Preßdruck wird — wie nachstehend noch erläutert wird — von Spannschrauben 8 im Zusammenwirken mit Druckringen 2 und 3 aufgebracht. Die in Radialrichtung auswärts liegenden Berandungsflächen der Spannzangen 5, 6 bzw. ihrer Segmente 50, 60 sind als Kegelflächen ausgebildet und befinden sich in Kontakt mit in gleicher Weise ausgebildeten Flächen der Druckringe 2 und 3, die durch die Spannschrauben 8 beaufschlagt sind. Beim Anspannen der Spannschrauben werden die Druckringe 2, 3 in Axialrichtung voneinander fortbewegt, mit der Folge, daß sich ihre kegelförmigen Innenflächen auf die kegelförmig ausgestalteten Außenflächen der Spannzangen 5, 6 aufschieben und dadurch die Segmente 50, 60 der Spannzangen 5, 6 in Radialrichtung nach innen pressen, wodurch das im Gehäuse 1 angeordnete Werkstück 101 festgelegt wird.

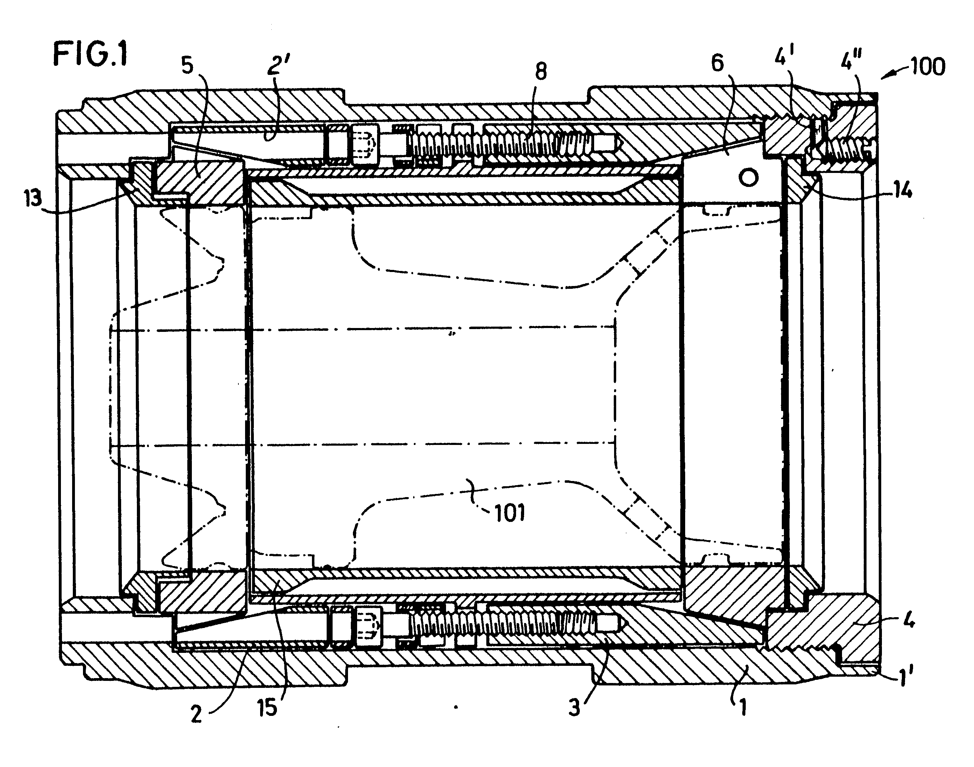

Das Spannen und Lösen der Spannschrauben 8 erfolgt von der Stirnseite der Spanneinrichtung her vermittels eines Werkzeugs, z. B. eines Sechkantschlüssels, der durch im Druckring 2 angeordnete Bohrungen 2' hindurch im Kopf der Spannschraube 8 angesetzt wird. Die Spannmittel wie Spannzangen 5, 6, Druckringe 2, 3 und Spannschrauben 8 werden innerhalb des Gehäuses 1 von Distanzringen bzw. Distanzbuchsen 13, 14, 15 festgelegt, deren Funktionsweise für den Fachmann aus der Zeichnung nach Fig. 1 ohne weiteres ersichtlich ist und daher keiner weiteren Erläuterung bedarf. Die dem Betätigungskopf der Spannschrauben 8 abgewandte Stirnseite des Gehäuses 1 ist mit einem Gewinde versehen, in welches ein Schraubring 4 eingeschraubt ist, der wiederum auch im Zusammenwirken mit dem Distanzring 14 in Axialrichtung einen Anschlag sowohl für die Spannzange 6, als auch den Druckring 3 bildet. Zur Sicherung des Schraubrings 4 gegen ein unerwünschtes Verdrehen sind mehrere, z. B. drei Sicherungsbolzen 4' vorgesehen, die in Radialrichtung bewegbar in Bohrungen des Schraubrings 4 gelagert sind und gegen das in der Innenwandung des Gehäuses 1 befindliche Gewinde gedrückt werden. Die der Längsachse des Gehäuses 1 zugewandten Endstücke der Sicherungsbolzen 4' enden in einer Schrägfläche, die von Stiftschrauben 4" mit kegelförmig ausgebildeten Enden beaufschlagt werden. Die Stiftschrauben 4" sind parallel zur Längsachse der Spannvorrichtung in Gewindebohrungen des Schraubrings 4 gelagert. Bei Eindrehen der Stiftschrauben 4" wirkt vermittels der schrägen Flächen der Sicherungsbolzen 4' eine Kraftkomponente in Radialrichtung auswärts auf die Sicherungsbolzen 4', so daß diese gegen das in der Innenwandung des Gehäuses 1 befindliche Gewinde gedrückt werden.

Die Spannvorrichtung ermöglicht das zuverlässige Einspannen eines zu bearbeitenden Werkstücks 101. Sie ist dabei überaus kompakt und ohne Anpassungsprobleme im Zusammenwirken mit hochleistungsfähigen Bearbeitungsmaschinen einsetzbar.

**Patentansprüche**

1. Spannvorrichtung (100) für Werkstücke (101) mit zylindrischer oder zumindest bereichsweise zylindrischer Außenkontur, mit einem das Werkstück (101) koaxial umgebenden Gehäuse (1), bei dem zumindest eine Stirnseite (1') vermittels eines Schraubringes (4) geschlossen ist, und mit vom Gehäuse (1) gehaltenen Spannmitteln (2, 3, 5, 6, 8), welche umfassen:

a) zwei in Axialrichtung gesehen mit Abstand voneinander angeordnete, aus Segmenten (50, 60) bestehende Spannzangen (5, 6), die vermittels zylindrischer Innenflächen auf der zylindrischen Außenkontur des Werkstückes (101) aufliegen und die kegelförmige Außenflächen (50', 60') aufweisen;

b) zwei in Axialrichtung mit Abstand voneinander angeordnete und in Axialrichtung bewegbar gelagerte Druckringe (2, 3) mit jeweils kegelförmigen Innenflächen zum Zusammenwirken mit den kegelförmigen Außenflächen der Spannzangen (5, 6);

c) mit den Druckringen (2, 3) zusammenwirkende Spannmittel (8), bei deren Spannen die Druckringe (2, 3) in Axialrichtung voneinander fortbewegt und bei deren Lösen die Druckringe (2, 3) in Axialrichtung aufeinander zu bewegt werden, gekennzeichnet durch folgende Merkmale:

d) die Spannmittel (8) bestehen aus zwischen den Druckringen (2, 3) angeordneten Spannschrauben, die vermittels in einem Druckring (2) angeordneter Bohrungen (2') von einer Stirnseite der Spanneinrichtung (100) her durch ein im Kopf einer jeden Spannschraube (8) ansetzbares Werkzeug anzieh- oder lösbar sind;

e) die aus den Druckringen (2, 3), der Spannzangen (5, 6) und den spannschrauben (8) bestehenden Spannmittel sind durch Distanzringe bzw. Distanzbuchsen (13, 14, 15) innerhalb des Gehäuses (1) festgelegt;

f) der Schraubring (4) ist vermittels mehrerer innerhalb von Bohrungen des Schraubrings (4) in Radialrichtung bewegbar gelagerten Sicherungsbolzen (4') sicherbar, die gegen das in der Innenwandung des Gehäuses (1) befindliche Gewinde gedrückt werden.

2. Spannvorrichtung nach Anspruch 1, dadurch gekennzeichnet, daß zur Betätigung der Sicherungsbolzen (4') Stiftschrauben (4") vorgesehen sind, die in Gewindebohrungen innerhhalb des Schraubringes (4) in Axialrichtung drehbar gelagert sind und vermittels ihrer kegelförmig ausgebildeten Endstücke auf den Schrägflächen der Sicherungsbolzen (4') aufsetzen.

**Claims**

1. Clamping device (100) for workpieces (101) with an external contour which is cylindrical at least in certain zones, with a housing (1) which coaxially surrounds the workpiece (101) and of which at least one face (1') is closed by means of a screw ring (4) and with clamping means (2, 3, 5, 6, 8) which are held by the housing (1) and which comprise:

(a) two collet chucks (5, 6) which are spaced apart as viewed in the axial direction and which consist of segments (50, 60) and which rest by means of cylindrical internal surfaces on the cylindrical external contour of the workpiece (101) and which have conical external surfaces (50', 60');

(b) two thrust collars (2, 3) which are spaced apart as viewed in the axial direction and which each have conical internal surfaces designed to interact with the conical external surfaces of the collet chucks (5, 6) ;

(c) clamping means (8) which interact with the thrust collars (2, 3) and in which the stressing causes the thrust collars (2, 3) to move away from each other in the axial direction and of which the slackening causes the thrust collars (2, 3) to move towards each other in the axial direction, characterised by the following features :

(d) the clamping means (8) consist of clamp screws which are situated between the thrust collars (2, 3) and which, by means of borings (2') provided in a thrust collar (2) can be tightened up or released, from one face of the clamping device (100), with the use of a tool which can be applied to the head of each clamp screw (8) ;

(e) the clamping means consisting of the thrust collars (2, 3), the collet chucks (5, 6) and the clamp screws (8) are secured inside the housing (1) by distance rings or distance bushings (13, 14, 15) ;

(f) the screw ring (4) can be secured by a number of securing bolts (4') which are mounted in a radially movable manner inside borings of the screw ring (4) and which are pressed against the screw threading present in the internal wall of the housing (1).

2. Clamping device in accordance with Claim 1, characterised by the fact that set screws (4") are provided for the operation of the securing bolts (4') and are mounted, rotatably in the axial direction, in threaded borings inside the thrust collar (4) and come to rest, by means of their conical end pieces, on the slanting surfaces of the securing bolts (4').

## Revendications

1. Dispositif de serrage (100) pour des pièces à usiner (101) ayant un contour extérieur cylindrique, ou cylindrique au moins. dans certaines zones, comportant un carter (1) entourant coaxialement la pièce à usiner (101), dont au moins un côté frontal (1') est fermé au moyen d'un anneau fileté (4), et des moyens de serrage (2, 3, 5, 6, 8) tenus par le carter (1), qui comportent :

a) deux pinces de serrage (5, 6) constituées de segments (50, 60) et disposées dans le sens axial à une certaine distance l'une de l'autre, lesquelles s'appliquent par des surfaces intérieures cylindriques sur le contour extérieur cylindrique de la pièce à usiner (101) et comportent des surfaces extérieures (50', 60') coniques ;

b) deux anneaux de pression (2, 3) montés mobiles dans le sens axial et disposés à une certaine distance l'un de l'autre dans le sens axial, et comportant des surfaces intérieures pour coopérer avec les surfaces extérieures coniques des pinces de serrage (5, 6) ;

c) des moyens de serrage (8) coopérant avec les anneaux de pression (2, 3), dont le serrage provoque l'éloignement des anneaux de pression (2, 3) l'un de l'autre dans le sens axial, et dont le desserrage provoque le rapprochement des anneaux de pression (2, 3) l'un de l'autre dans le sens axial, caractérisé en ce que :

d) les moyens de serrage (8) sont constitués par des vis de serrage disposées entre les anneaux de pression (2, 3), lesquelles peuvent être vissées ou dévissées à l'aide d'un outil pouvant être mis dans la tête de chaque vis de serrage (8) à partir d'un côté frontal du dispositif de serrage (100), grâce à des alésages disposés dans un anneau de pression (2) ;

e) les moyens de serrage constitués par les anneaux de pression (2, 3), les pinces de serrage (5, 6) et les vis de serrage (8) sont fixés à l'intérieur du carter (1) à l'aide de bagues ou de douilles d'écartement (13, 14, 15) ;

f) l'anneau fileté (4) peut être bloqué au moyen de plusieurs boulons d'arrêt (4') montés mobiles dans le sens radial à l'intérieur d'alésages de l'anneau de pression (4), lesquels sont pressés contre le filetage se trouvant dans la paroi intérieure du carter (1).

2. Dispositif de serrage selon la revendication 1, caractérisé en ce qu'on prévoit, pour actionner les boulons d'arrêt (4') des goujons filetés (4") qui sont montés de façon à pouvoir tourner dans le sens axial dans des alésages taraudés à l'intérieur de l'anneau fileté (4) et appuient par leurs extrémités coniques sur les surfaces obliques des goujons d'arrêt (4').

FIG.1

EP 0 153 560 B1

# FIG.2

50,60

50',60'